# EUROPEAN PATENT SPECIFICATION

(11) **EP 2 102 256 B1**
(45) Date of publication and mention of the grant of the patent: **25.01.2012**
(21) Application number: 07857335.9
(22) Date of filing: 10.12.2007
(51) Int. Cl.: C08F 220/00, C08F 220/18

(54) **POLYMERS**
POLYMERE
POLYMÈRES

(30) Priority: 12.12.2006 EP 06125942
(43) Date of publication of application: 23.09.2009
(73) Proprietor: Unilever PLC, London EC4Y 0DY (GB); Unilever N.V., 3013 AL Rotterdam (NL)
(72) Inventor: FINDLAY, Paul Hugh, Bebington Wirral Merseyside CH63 3JW (GB); RANNARD, Steven Paul, Mickle Trafford Chester CH2 4EJ (GB); ROYLES, Brodyck James Lachlan, Bebington Wirral Merseyside CH63 3JW (GB); WEAVER, Jonathan Victor Mark, Hoole Chester CH2 3PN (GB)
(74) Representative: Teasdale, Nicola Joanne
(86) International application number: PCT/EP2007/063615
(87) International publication number: WO 2008/071661

(56) References cited:
- US-A1- 2006 106 133
- US-B1- 6 361 768
- H. HAYASHI ET AL: MACROMOLECULES, vol. 37, 25 April 2004 (2004-04-25), pages 5389-5396, XP002424658 cited in the application

## Description

The present invention relates to certain amphiphilic branched copolymers, a branched copolymer particle comprising such an amphiphilic branched copolymer, methods for their preparation, compositions containing such copolymers and particles and their use as, for instance, encapsulating agents, nanoreactors, Pickering emulsifiers, controlled release agents and/or triggered release agents.

Branched polymers are polymer molecules of a finite size which are branched. Branched polymers differ from crosslinked polymer networks which tend towards an infinite size having interconnected molecules and which are generally not soluble. In some instances, branched polymers have advantageous properties when compared to analogous linear polymers. For instance, solutions of branched polymers are normally less viscous than solutions of analogous linear polymers. Moreover, higher molecular weights of branched copolymers can be solubilised more easily than those of corresponding linear polymers. Also, branched polymers tend to have more end groups than a linear polymer and therefore generally exhibit strong surface-modification properties. Thus, branched polymers are useful components of many compositions utilised in a variety of fields.

Branched polymers are usually prepared via a step-growth mechanism via the polycondensation of a suitable monomer which are usually limited via the chemical functionality of the resulting polymer and the molecular weight. In addition polymerisation, a one-step process can be used in which a multifunctional monomer is used to provide functionality in the polymer chain from which polymer branches may grow. However, a limitation on the use of conventional one-step processes is that the amount of multifunctional monomer must be carefully controlled, usually to substantially less than 0.5% w/w in order to avoid extensive cross-linking of the polymer and the formation of insoluble gels. It is difficult to avoid crosslinking using this method, especially in the absence of a solvent as diluent and/or at high conversion of monomer to polymer.

Amphiphilic branched copolymers are branched copolymers which have both a hydrophilic portion and a hydrophobic portion.

WO 99/46301 discloses a method of preparing a branched polymer comprising the steps of mixing together a monofunctional vinylic monomer with from 0.3 to 100% w/w (of the weight of the monofunctional monomer) of a multifunctional vinylic monomer and from 0.0001 to 50% w/w (of the weight of the monofunctional monomer) of a chain transfer agent and optionally a free-radical polymerisation initiator and thereafter reacting said mixture to form a copolymer. The examples of WO 99/46301 describe the preparation of primarily hydrophobic polymers and, in particular, polymers in which methyl methacrylate constitutes the monofunctional monomer. These polymers are useful as components of surface coatings and inks or as moulding resins.

WO 02/34793 discloses a copolymer composition comprising a copolymer derived from at least one unsaturated carboxylic acid monomer, at least one hydrophobic monomer, a hydrophobic chain transfer agent, a crosslinking agent, and, optionally, a steric stabiliser. The copolymer composition acts as a rheology modifier in that it provides increased viscosity in aqueous electrolyte-containing environments.

K. B. Thurmond II et al. (J. Am. Chem. Soc., (1996), 118, 7239-7240) describe the first preparation of so-called shell cross-linked (SCL) micelles. These particles are formed via a rather tedious, multi-step synthesis involving: (1) purification of monomers and synthesis of a linear polystyrene-block-poly(4-vinyl pyridine) (PS-PVP) block copolymer under stringent living anionic polymerisation conditions, (2) purification and characterisation of the diblock copolymer, (3) post-polymerisation quaternisation of the diblock copolymer with p-(chloromethyl styrene) to tether further polymerisable groups onto the PVP block followed by purification and characterisation, (4) assembly of the functionalised PS-PVP diblock copolymer into PS-core micelles using tetrahydrofuran (THF) co-solvent followed by its removal via evaporation, (5) covalent stabilisation of the micelle shell by polymerisation of the tethered styrenic residues using a free-radical initiator and irradiation, (6) characterisation of the SCL micelles. Despite the elegant synthesis and wide-ranging potential applications, these SCL micelles are too time-consuming and expensive to prepare via this route on a commercial scale.

V. Bütün et al. (J. Am. Chem. Soc., (1998), 120, 12135-12136) describe an advance in SCL micelle synthesis which (1) removes the necessity to use a co-solvent for the micellar assembly and (2) allows potential triggered uptake and release of hydrophobic actives. Their approach uses a responsive core-forming block which changes its hydrophilicity/hydrophobicity depending on the solution temperature, pH and ionic strength. Despite these advances, the linear diblock copolymer synthesis remains an expensive and limiting step.

S. Liu and S. P. Armes (J. Am. Chem. Soc., (2001), 123, 9910-9911) more recently reported a further development towards the large-scale production of SCL micelles. The authors showed that by using a linear ABC triblock copolymer, rather than a linear AB diblock copolymer, the shell cross-linking step can be performed at high solids content (up to 10 weight %). Atom transfer radical polymerisation (ATRP) was used to synthesise the ABC triblock copolymer via sequential monomer addition. The thermoresponsive core-forming A-block was based on a functionalised poly(propyleneoxide) (PPO)-based macroinitiator, the hydrophilic cross-linkable B-block was based on 2-(dimethylamino)ethyl methacrylate and the additional steric stabilising C-block was based on oligo(ethyleneglycol) methacrylate. After polymerisation in bulk (and aqueous solution) the polymerisation mixture was diluted to 10 weight % solids, heated to 40°C to form PPO-core micelles and then cross-linked using bis-(2-iodoethoxy)ethane. Thus the whole synthesis is performed in one-pot from individual monomers to SCL micelles. The SCL micelles remain thermoresponsive; as such they swell at low temperature when the PPO-cores are hydrophilic and contract at elevated temperatures as the PPO becomes hydrophobic. Despite these developments the large-scale synthesis of SCL micelles remains commercially impractical; primarily due to the synthesis of the linear block copolymer, but also because cross-linking strategies typically require hazardous chemicals. In addition, despite the synthesis being a one-pot procedure, it remains multi-step.

Using an alternative approach, H. Hayashi et al. (Macromolecules, (2004), 37, 5389) describe the preparation of a pH-sensitive "nanogel" possessing poly(ethylene glycol) (PEG) chains on the surface. In this approach, a copolymerisation of 2-(diethylaminoethyl) methacrylate (DEA) and ethylene glycol dimethacrylate (EGDMA) produced a cross-linked (or gelled) but responsive core which is stabilised by a specially synthesised PEG-based macromonomer. The nanogels were synthesised by emulsion polymerisation to give cross-linked gel networks with dimensions of 50 to 680 nm. In a very similar paper, J. I. Amalvy et al. (Langmuir, (2004), 20, 8992-8999) refer to their analogous poly(ethyleneglycol) methacrylate (PEGMA) stabilised, DEA core cross-linked polymers as 'microgels'. In this example, the pH-responsive gelled particles have dimensions of around 250-700nm at pH 8-9.

It has now been found that amphiphilic branched non-cross-linked copolymers having a novel polymer architecture can be prepared by an addition polymerisation method.

These amphiphilic branched copolymers can form particles rather than conventional, solvated polymers or gels in aqueous solution if certain criteria are met. These copolymers and particles can be readily synthesised and have a variety of applications as a result of their advantageous properties.

A first aspect of the invention provides an amphiphilic branched copolymer obtainable by an addition (preferably free-radical) polymerisation process which is the reaction product of:
(a) an initiator (E and E'),
(b) a compatible chain transfer agent (E and E'),
(c) at least one ethyleneically monounsaturated monomer (G and/or J),
(d) at least one ethyleneically polyunsaturated monomer (L),
wherein
the mole ratio of (d) to (c) is greater than 0.0005 to 1, and
wherein the amphiphilic branched copolymer comprises the general formula 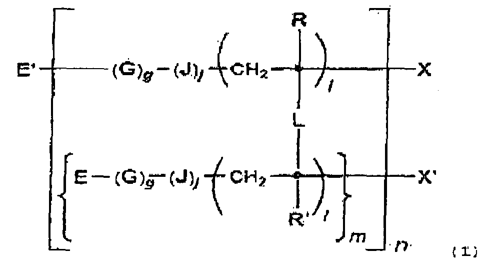 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and I represent the molar ratio of each residue normalised so that g + j = 100, wherein g and j each independently represent 0 to 100, and I is ≥ 0.05 ; and m and n are each independently ≥ 1;
at least one of E, E', G, J, and L is a hydrophilic residue; and at least one of E, E', G, J, and L is a hydrophobic residue;
and in which at least one of E, E', G, J, and L is a hydrophilic residue having a molecular weight of at least 1000 Daltons;
and in which the total hydrophobe content is from 20 to 60 wt% based on the weight of the total polymer.

The amphiphilic branched copolymers of the invention are branched, non-crosslinked addition polymers and include statistical, gradient and alternating branched copolymers.

A second aspect of the invention provides a method of preparing such an amphiphilic branched copolymer by an addition polymerisation process, preferably a free-radical polymerisation process,
which comprises mixing together
(a) at least one monofunctional monomer,
(b) at least 0.05 mole % (based on the number of moles of monofunctional monomer) of a multifunctional monomer;
(c) a chain transfer agent; and
(d) an initiator, optionally but preferably a free-radical initiator;
and subsequently reacting said mixture to form a branched copolymer.

In a third aspect, the invention provides a branched copolymer particle which comprises an amphiphilic branched copolymer as defined above.

In a fourth aspect, the invention provides a method of preparing a branched copolymer particle as defined above which comprises adding an amphiphilic branched copolymer as defined above to a solvent and, optionally, removing the solvent.

In a fifth aspect, the invention provides a composition comprising an amphiphilic branched copolymer as defined above or a branched copolymer particle as defined above and a carrier.

In a sixth aspect, the invention provides use of an amphiphilic branched copolymer as defined above or a branched copolymer particle as defined above as an encapsulating agent, a nanoreactor, a Pickering emulsifier, a controlled release agent and/or a triggered release agent.

### Definitions

The following definitions pertain to chemical structures, molecular segments and substituents:

The term "alkyl" as used herein refers to a branched or unbranched saturated hydrocarbon group which may contain from 1 to 12 carbon atoms, such as methyl, ethyl, n-propyl, isopropyl, n-butyl, isobutyl, t-butyl, octyl, decyl etc. More preferably, an alkyl group contains from 1 to 6, preferably 1 to 4 carbon atoms. Methyl, ethyl and propyl groups are especially preferred. "Substituted alkyl" refers to alkyl substituted with one or more substituent groups. Preferably, alkyl and substituted alkyl groups are unbranched.

Typical substituent groups include, for example, halogen atoms, nitro, cyano, hydroxyl, cycloalkyl, alkyl, alkenyl, haloalkyl, alkoxy, haloalkoxy, amino, alkylamino, dialkylamino, formyl, alkoxycarbonyl, carboxyl, alkanoyl, alkylthio, alkylsulfinyl, alkylsulfonyl, alkylsulfonato, arylsulfinyl, arylsulfonyl, arylsulfonato, phosphinyl, phosphonyl, carbamoyl, amido, alkylamido, aryl, aralkyl and quaternary ammonium groups, such as betaine groups. Of these substituent groups, halogen atoms, cyano, hydroxyl, alkyl, haloalkyl, alkoxy, haloalkoxy, amino, carboxyl, amido and quaternary ammonium groups, such as betaine groups, are particularly preferred. When any of the foregoing substituents represents or contains an alkyl or alkenyl substituent group, this may be linear or branched and may contain up to 12, preferably up to 6, and especially up to 4, carbon atoms. A cycloalkyl group may contain from 3 to 8, preferably from 3 to 6, carbon atoms. An aryl group or moiety may contain from 6 to 10 carbon atoms, phenyl groups being especially preferred. A halogen atom may be a fluorine, chlorine, bromine or iodine atom and any group which contains a halo moiety, such as a haloalkyl group, may thus contain any one or more of these halogen atoms.

Terms such as "(meth)acrylic acid" embrace both methacrylic acid and acrylic acid. Analogous terms should be construed similarly.

Terms such as "alk/aryl" embrace alkyl, alkaryl, aralkyl (e.g. benzyl) and aryl groups and moieties.

Molar percentages are based on the total monofunctional monomer content.

Molecular weights of monomers and polymers are expressed as weight average molecular weights, except where otherwise specified.

### The Copolymers and Particles

The amphiphilic branched copolymers of the invention can self-assemble in aqueous solution to form core-shell structures analogous to conventional block copolymer micelles. Thus, the invention provides a branched copolymer particle which comprises an amphiphilic branched copolymer as defined above. In some cases, it may be necessary to use a water-miscible cosolvent, such as tetrahydrofuran, which can be optionally removed. However, under certain conditions, the amphiphilic branched copolymers can assemble into branched copolymer particles directly in water, thus negating the need for a co-solvent during particle formation. This tends to be the case when the amphiphilic branched copolymers have a relatively high content of hydrophilic components.

In the context of the present specification, self-assembled amphiphilic branched polymers are referred to as "branched copolymer particles" or "particles". Such structures contain a hydrophobic domain which forms the "core" and a hydrophilic domain which forms the "shell" and stabilises the core. In the absence of the shell, the core-forming domain would phase separate from solution under the same conditions. Consequently, the term "particles" may be defined as amphiphilic, partially solvated/partially desolvated branched copolymers. Such particles are preferably nanoparticles with hydrodynamic diameters from 2-600 nm, preferably 2 to 300 nm, more preferably 5 to 100 nm, particularly 5 to 75 nm and especially 10 to 60 nm, which may scatter light in solution yet do not appreciably sediment (macroscopic precipitation) on reasonable time-scales (e.g. one day) in dilute solution. The hydrophilic and hydrophobic domains arise from the nature of the particle components, namely the monofunctional and multifunctional monomers and, in some instances, the initiator and/or chain transfer agent. It is also envisaged that, in some circumstances e.g. formulation in a hydrophobic solvent, it may be advantageous for the hydrophilic domain to form the core and the hydrophobic domain to form the shell. Thus, all references to a hydrophobic core and a hydrophilic shell in this specification are interchangeable with references to a hydrophilic core and a hydrophobic shell. However, branched copolymer particles which comprise a hydrophobic core and a hydrophilic shell are preferred. It is also envisaged that "responsive" components may be used. The term "responsive" as used herein refers to a component of the copolymer whose solubility in a solvent (usually water) changes depending on an external factor such as solution pH, temperature or ionic strength. Thus, depending on this external factor, these components can form either the shell or the core of the particle.

The amphiphilic branched copolymers of the invention are branched, non-crosslinked addition polymers and include statistical, gradient and alternating branched copolymers. The amphiphilic branched copolymer of the present invention has the general formula 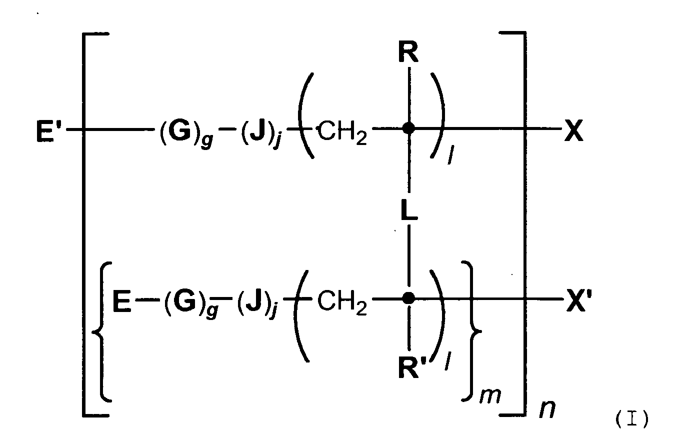 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and 1 represent the molar ratio of each residue normalised so that g + j = 100, wherein g and j each independently represent 0 to 100, and 1 is ≥ 0.05; and
m and n are each independently ≥ 1;
at least one of E, E', G, J and L is a hydrophilic residue;
and
at least one of E, E', G, J and L is a hydrophobic residue.

The copolymer may also contain unreacted vinyl groups from the multifunctional monomer.

The copolymer is prepared by an addition polymerisation method, which is a conventional free-radical polymerisation technique using a chain transfer agent.

A particle can be created in several different ways. However, the hydrophilic portion must always be sufficient (in terms of a combination of hydrophilicity, molecular weight and weight percentage incorporation) to stabilise the core.

The shell-forming domain can be formed from any hydrophilic polymer components but is preferably high molecular weight. At least one of E, E', G, J and L is a hydrophilic residue having a molecular weight of at least 1000 Daltons. Preferably, the hydrophilic component is derived from the multifunctional monomer, more preferably from the chain transfer agent (during conventional free-radical polymerisation) or the initiator, but most preferably from a monofunctional monomer. The shell-forming domain can be present from 0.1 weight % to 99.9 weight %, based on the total weight of the particle. In general, a higher weight percent incorporation produces a particle which is more stable towards sedimentation. In all cases, a combination of hydrophilic components is possible and may be desirable.

The core-forming domain can be formed from any hydrophobic components of the polymer. Higher molecular weight hydrophobic species are typically more hydrophobic than lower molecular weight hydrophobic species. Preferably, the hydrophobic component is derived from the multifunctional monomer, more preferably from the chain transfer agent (during conventional free-radical polymerisation) or the initiator, but most preferably from a monofunctional monomer. The core-forming domain can be present from 0.1 weight % to 99.9 weight %, based on the total weight of the particle. In general, a higher weight percent incorporation of the core-forming component produces a particle which is less stable towards sedimentation. In all cases, a combination of hydrophobic components is possible and may be desirable.

Responsive components can reversibly form either the core domain or shell domain, depending on external factors including but not limited to temperature, pH and/or ionic strength. Such components are most easily characterised by their application and can be considered to be hydrophilic and/or hydrophobic.

Preferably, one of E and E' represents the residue of a chain transfer agent and the other of E and E' represents the residue of an initiator.

The chain transfer agent (CTA) is a molecule which is known to reduce molecular weight during a free-radical
polymerisation via a chain transfer mechanism. These agents may be any thiol-containing molecule and can be either monofunctional or multifunctional. The agent may be hydrophilic, hydrophobic, amphiphilic, anionic, cationic, neutral, zwitterionic or responsive. The molecule can also be an oligomer or a pre-formed polymer containing a thiol moiety. (The agent may also be a hindered alcohol or similar free-radical stabiliser). Catalytic chain transfer agents such as those based on transition metal complexes such as cobalt bis(borondifluorodimethyl-glyoximate) (CoBF) may also be used. Suitable thiols include but are not limited to C2-C18 alkyl thiols such as dodecane thiol, thioglycolic acid, thioglycerol, cysteine and cysteamine. Thiol-containing oligomers or polymers may also be used such as poly(cysteine) or an oligomer or polymer which has been post-functionalised to give a thiol group(s), such as poly(ethyleneglycol) (di)thio glycollate, or a pre-formed polymer functionalised with a thiol group, for example, reaction of an end or side-functionalised alcohol such as poly(propylene glycol) with thiobutyrolactone, to give the corresponding thiol-functionalised chain-extended polymer. Multifunctional thiols may also be prepared by the reduction of a xanthate, dithioester or trithiocarbonate end-functionalised polymer prepared via a Reversible Addition Fragmentation Transfer (RAFT) or Macromolecular Design by the Interchange of Xanthates (MADIX) living radical method. Xanthates, dithioesters, and dithiocarbonates may also be used, such as cumyl phenyldithioacetate. Alternative chain transfer agents may be any species known to limit the molecular weight in a free-radical addition polymerisation including alkyl halides and transition metal salts or complexes. More than one chain transfer agent may be used in combination. When the chain transfer agent is providing the necessary hydrophilicity in the copolymer, it is preferred that the chain transfer agent is hydrophilic and has a molecular weight of at least 1000 Daltons.

Hydrophilic CTAs typically contain hydrogen bonding and/or permanent or transient charges. Hydrophilic CTAs include thio-acids such as thioglycolic acid and cysteine, thioamines such as cysteamine and thioalcohols such as 2-mercaptoethanol, thioglycerol and ethylene glycol mono- (and di-)thio glycollate. Hydrophilic macro-CTAs (where the molecular weight of the CTA is at least 1000 Daltons) can be prepared from hydrophilic polymers synthesised by RAFT (or MADIX) followed by reduction of the chain end, or alternatively the terminal hydroxyl group of a preformed hydrophilic polymer can be post functionalised with a compound such as thiobutyrolactone.

Hydrophobic CTAs include linear and branched alkyl and aryl (di)thiols such as dodecanethiol, octadecyl mercaptan, 2-methyl-1-butanethiol and 1,9-nonanedithiol. Hydrophobic macro-CTAs (where the molecular weight of the CTA is at least 1000 Daltons) can be prepared from hydrophobic polymers synthesised by RAFT (or MADIX) followed by reduction of the chain end, or alternatively the terminal hydroxyl group of a preformed hydrophobic polymer can be post functionalised with a compound such as thiobutyrolactone.

Responsive macro-CTAs (where the molecular weight of the CTA is at least 1000 Daltons) can be prepared from responsive polymers synthesised by RAFT (or MADIX) followed by reduction of the chain end, or alternatively the terminal hydroxyl group of a preformed responsive polymer, such as poly(propylene glycol), can be post functionalised with a compound such as thiobutyrolactone.

The residue of the chain transfer agent may comprises 0.05 to 80 mole %, preferably 0.05 to 50 mole %, more preferably 0.05 to 40 mole % and especially 0.05 to 30 mole %, of the copolymer (based on the number of moles of monofunctional monomer).

The initiator is a free-radical initiator and can be any molecule known to initiate free-radical polymerisation such as azo-containing molecules, persulfates, redox initiators, peroxides, benzyl ketones. These may be activated via thermal, photolytic or chemical means. Examples of these include but are not limited to 2,2'-azobisisobutyronitrile (AIBN), azobis(4-cyanovaleric acid), benzoyl peroxide, cumylperoxide, 1-hydroxycyclohexyl phenyl ketone, hydrogenperoxide/ascorbic acid. Iniferters such as benzyl-N,N-diethyldithiocarbamate can also be used. In some cases, more than one initiator may be used. The initiator may be a macroinitiator having a molecular weight of at least 1000 Daltons. In this case, the macroinitiator may be hydrophilic or hydrophobic.

Preferably, the residue of the initiator in a free-radical polymerisation comprises 0.01 to 5% w/w and especially 0.01 to 3% w/w, of the copolymer based on the total weight of the monomers.

A chain transfer agent and an initiator is used. However, some molecules can perform both functions.

Hydrophilic macroinitiators contain hydrogen bonding and/or permanent or transient charges. Hydrophilic macroinitiators (where the molecular weight of the preformed polymer is at least 1000 Daltons) can be prepared from hydrophilic polymers synthesised by RAFT (or MADIX), or the terminal hydroxyl group of a preformed hydrophilic polymer can be post-functionalised with a compound such as 2-bromoisobutyryl bromide.

Hydrophobic macroinitiators (where the molecular weight of the preformed polymer is at least 1000 Daltons) can be prepared from hydrophobic polymers synthesised by RAFT (or MADIX), or the terminal hydroxyl group of a preformed hydrophilic polymer can be post-functionalised with a compound such as 2-bromoisobutyryl bromide.

Responsive macroinitiators (where the molecular weight of the preformed polymer is at least 1000 Daltons) can be prepared from responsive polymers synthesised by RAFT (or MADIX), or the terminal hydroxyl group of a preformed hydrophilic polymer can be post-functionalised with a compound such as 2-bromoisobutyryl bromide.

Preferably, the macroinitiator is hydrophilic.

The monofunctional monomer may comprise any carbon-carbon unsaturated compound which can be polymerised by an addition polymerisation mechanism, e.g. vinyl and allyl compounds. The monofunctional monomer may be hydrophilic, hydrophobic, amphiphilic, anionic, cationic, neutral or zwitterionic in nature. The monofunctional monomer may be selected from but not limited to monomers such as vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives of the aforementioned compounds as well as corresponding allyl variants thereof. Other suitable monofunctional monomers include hydroxyl-containing monomers and monomers which can be post-reacted to form hydroxyl groups, acid-containing or acid-functional monomers, zwitterionic monomers and quaternised amino monomers. Oligomeric, polymeric and di- or multi-functionalised monomers may also be used, especially oligomeric or polymeric (meth)acrylic acid esters such as mono(alk/aryl) (meth)acrylic acid esters of polyalkyleneglycol or polydimethylsiloxane or any other mono-vinyl or allyl adduct of a low molecular weight oligomer. Mixtures of more than one monomer may also be used to give statistical, gradient or alternating copolymers. Thus, G and J each independently represent a residue of a monofunctional monomer as described above.

Vinyl acids and derivatives thereof include (meth)acrylic acid and acid halides thereof such as (meth)acryloyl chloride. Vinyl acid esters and derivatives thereof include C1-20 alkyl(meth)acrylates (linear & branched) such as methyl (meth)acrylate, stearyl (meth)acrylate and 2-ethyl hexyl (meth)acrylate, aryl(meth)acrylates such as benzyl (meth)acrylate, tri(alkyloxy)silylalkyl(meth)acrylates such as trimethoxysilylpropyl(meth)acrylate and activated esters of (meth)acrylic acid such as N-hydroxysuccinamido (meth)acrylate. Vinyl aryl compounds and derivatives thereof include styrene, acetoxystyrene, styrene sulfonic acid, vinyl pyridine, vinylbenzyl chloride and vinyl benzoic acid. Vinyl acid anhydrides and derivatives thereof include maleic anhydride. Vinyl amides and derivatives thereof include (meth)acrylamide, N-(2-hydroxypropyl)methacrylamide, N-vinyl pyrrolidone, N-vinyl formamide, (meth)acrylamidopropyl trimethyl ammonium chloride, [3-((meth)acrylamido)propyl]dimethyl ammonium chloride, 3-[N-(3-(meth)acrylamidopropyl)-N,N-dimethyl]aminopropane sulfonate, methyl (meth)acrylamidoglycolate methyl ether and N-isopropyl(meth)acrylamide. Vinyl ethers and derivatives thereof include methyl vinyl ether. Vinyl amines and derivatives thereof include dimethylaminoethyl (meth)acrylate, diethylaminoethyl (meth)acrylate, diisopropylaminoethyl (meth)acrylate, mono-t-butylaminoethyl (meth)acrylate, morpholinoethyl(meth)acrylate and monomers which can be post-reacted to form amine groups, such as vinyl formamide. Vinyl aryl amines and derivatives thereof include vinyl aniline, vinyl pyridine, N-vinyl carbazole and vinyl imidazole. Vinyl nitriles and derivatives thereof include (meth)acrylonitrile. Vinyl ketones and derivatives thereof include acreolin.

Hydroxyl-containing monomers include vinyl hydroxyl monomers such as hydroxyethyl (meth)acrylate, hydroxy propyl (meth)acrylate, glycerol mono(meth)acrylate and sugar mono(meth)acrylates such as glucose mono(meth)acrylate. Monomers which can be post-reacted to form hydroxyl groups include vinyl acetate, acetoxystyrene and glycidyl (meth)acrylate. Acid-containing or acid functional monomers include (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid, mono-2-((meth)acryloyloxy)ethyl succinate and ammonium sulfatoethyl (meth)acrylate. Zwitterionic monomers include (meth)acryloyl oxyethylphosphoryl choline and betaines, such as [2-((meth)acryloyloxy)ethyl] dimethyl-(3-sulfopropyl)ammonium hydroxide. Quaternised amino monomers include (meth)acryloyloxyethyltri-(alk/aryl)ammonium halides such as (meth)acryloyloxyethyltrimethyl ammonium chloride.

Oligomeric and polymeric monomers include oligomeric and polymeric (meth)acrylic acid esters such as mono(alk/aryl)oxypolyalkyleneglycol(meth)acrylates and mono(alk/aryl)oxypolydimethyl-siloxane(meth)acrylates. These esters include monomethoxy oligo(ethyleneglycol) mono(meth)acrylate, monomethoxy oligo(propyleneglycol) mono(meth)acrylate, monohydroxy oligo(ethyleneglycol) mono(meth)acrylate, monohydroxy oligo(propyleneglycol) mono(meth)acrylate, monomethoxy poly(ethyleneglycol) mono(meth)acrylate, monomethoxy poly(propyleneglycol) mono(meth)acrylate, monohydroxy poly(ethyleneglycol) mono(meth)acrylate and monohydroxy poly(propyleneglycol) mono(meth)acrylate. Further examples include vinyl or allyl esters, amides or ethers of pre-formed oligomers or polymers formed via ring-opening polymerisation such as oligo(caprolactam), oligo(caprolactone), poly(caprolactam) or poly(caprolactone), or oligomers or polymers formed via a living polymerisation technique such as poly(1,4-butadiene).

The corresponding allyl monomers to those listed above can also be used where appropriate.

More preferred monomers include:
amide-containing monomers such as (meth)acrylamide, N-(2-hydroxypropyl)methacrylamide, N,N'-dimethyl(meth)acrylamide, N and/or N'-di(alkyl or aryl) (meth)acrylamide, N-vinyl pyrrolidone, [3-((meth)acrylamido)propyl] trimethyl ammonium chloride, 3-(dimethylamino)propyl(meth)acrylamide, 3-[N-(3-(meth)acrylamidopropyl)-N,N-dimethyl]aminopropane sulfonate, methyl (meth)acrylamidoglycolate methyl ether and N-isopropyl(meth)acrylamide;
(Meth)acrylic acid and derivatives thereof such as (meth)acrylic acid, (meth)acryloyl chloride (or any halide), (alkyl/aryl)(meth)acrylate, functionalised oligomeric or polymeric monomers such as monomethoxy oligo(ethyleneglycol) mono(meth)acrylate, monomethoxy oligo(propyleneglycol) mono(meth)acrylate, monohydroxy oligo(ethyleneglycol) mono(meth)acrylate, monohydroxy oligo(propyleneglycol) mono(meth)acrylate.monomethoxy poly(ethyleneglycol) mono(meth)acrylate, monomethoxy poly(propyleneglycol) mono(meth)acrylate, monohydroxy poly(ethyleneglycol) mono(meth)acrylate, monohydroxy poly(propyleneglycol) mono(meth)acrylate. glycerol mono(meth)acrylate and sugar mono(meth)acrylates such as glucose mono(meth)acrylate;
vinyl amines such as aminoethyl (meth)acrylate, dimethylaminoethyl (meth)acrylate, diethylaminoethyl (meth)acrylate, diisopropylaminoethyl (meth)acrylate, mono-t-butylamino (meth)acrylate, morpholinoethyl(meth)acrylate, vinyl aryl amines such as vinyl aniline, vinyl pyridine, N-vinyl carbazole, vinyl imidazole, and monomers which can be post-reacted to form amine groups, such as vinyl formamide; vinyl aryl monomers such as styrene, vinyl benzyl chloride, vinyl toluene, α-methyl styrene, styrene sulfonic acid and vinyl benzoic acid;
vinyl hydroxyl monomers such as hydroxyethyl (meth)acrylate, hydroxy propyl (meth)acrylate, glycerol mono(meth)acrylate or monomers which can be post-functionalised into hydroxyl groups such as vinyl acetate, acetoxy styrene and glycidyl (meth)acrylate; acid-containing monomers such as (meth)acrylic acid, styrene sulfonic acid, vinyl phosphonic acid, vinyl benzoic acid, maleic acid, fumaric acid, itaconic acid, 2-(meth)acrylamido 2-ethyl propanesulfonic acid and mono-2-((meth)acryloyloxy)ethyl succinate or acid anhydrides such as maleic anhydride;
zwitterionic monomers such as (meth)acryloyl oxyethylphosphoryl choline and betaine-containing monomers, such as [2-((meth)acryloyloxy)ethyl] dimethyl-(3-sulfopropyl)ammonium hydroxide;
quaternised amino monomers such as (meth)acryloyloxyethyltrimethyl ammonium chloride.

The corresponding allyl monomer, where applicable, can also be used in each case.

Functional monomers, i.e. monomers with reactive pendant groups which can be post or pre-modified with another moiety following polymerisation can also be used such as glycidyl (meth)acrylate, tri(alkoxy)silylalkyl(meth)acrylates such as trimethoxysilylpropyl(meth)acrylate, (meth)acryloyl chloride, maleic anhydride, hydroxyalkyl (meth)acrylates, (meth)acrylic acid, vinylbenzyl chloride, activated esters of (meth)acrylic acid such as N-hydroxysuccinamido (meth)acrylate and acetoxystyrene.

Macromonomers (monomers having a molecular weight of at least 1000 Daltons) are generally formed by linking a polymerisable moiety, such as a vinyl or allyl group, to a pre-formed monofunctional polymer via a suitable linking unit such as an ester, an amide or an ether. Examples of suitable polymers include mono functional poly(alkylene oxides) such as monomethoxy[poly(ethyleneglycol)] or monomethoxy[poly(propyleneglycol)], silicones such as poly(dimethylsiloxane)s, polymers formed by ring-opening polymerisation such as poly(caprolactone) or poly(caprolactam) or mono-functional polymers formed via living polymerisation such as poly(1,4-butadiene).

Preferred macromonomers include
monomethoxy[poly(ethyleneglycol)] mono(methacrylate), monomethoxy[poly(propyleneglycol)] mono(methacrylate) and mono(meth)acryloxypropyl-terminated poly(dimethylsiloxane).

When the monofunctional monomer is providing the necessary hydrophilicity in the copolymer, it is preferred that G and/or J is a residue of a hydrophilic monofunctional monomer, preferably having a molecular weight of at least 1000 Daltons.

Hydrophilic monofunctional monomers contain hydrogen bonding and/or permanent or transient charges. Hydrophilic monofunctional monomers include (meth)acryloyl chloride, N-hydroxysuccinamido (meth)acrylate, styrene sulfonic acid, maleic anhydride, (meth)acrylamide, N-(2-hydroxypropyl)methacrylamide, N-vinyl pyrrolidinone, N-vinyl formamide, quaternised amino monomers such as (meth)acrylamidopropyl trimethyl ammonium chloride, [3-((meth)acrylamido)propyl]trimethyl ammonium chloride and (meth)acryloyloxyethyltrimethyl ammonium chloride, 3-[N-(3-(meth)acrylamidopropyl)-N,N-dimethyl]aminopropane sulfonate, methyl (meth)acrylamidoglycolate methyl ether, glycerol mono(meth)acrylate, monomethoxy and monohydroxy oligo(ethylene oxide) (meth)acrylate, sugar mono(meth)acrylates such as glucose mono(meth)acrylate, (meth)acrylic acid, styrene sulfonic acid, vinyl phosphonic acid, fumaric acid, itaconic acid, 2-(meth)acrylamido 2-ethyl propanesulfonic acid, mono-2-((meth)acryloyloxy)ethyl succinate, ammonium sulfatoethyl (meth)acrylate, (meth)acryloyl oxyethylphosphoryl choline and betaine-containing monomers such as [2-((meth)acryloyloxy)ethyl] dimethyl-(3-sulfopropyl)ammonium hydroxide. Hydrophilic macromonomers may also be used and include monomethoxy and monohydroxy poly(ethylene oxide) (meth)acrylate and other hydrophilic polymers with terminal functional groups which can be post-functionalised with a polymerisable moiety such as (meth)acrylate, (meth)acrylamide or styrenic groups. Hydrophobic monofunctional monomers include C1-20 alkyl (meth)acrylates (linear and branched and (meth)acrylamides, such as methyl (meth)acrylate and stearyl (meth)acrylate, aryl(meth)acrylates such as benzyl (meth)acrylate, tri(alkyloxy)silylalkyl(meth)acrylates such as trimethoxysilylpropyl(meth)acrylate, styrene, acetoxystyrene, vinylbenzyl chloride, methyl vinyl ether, vinyl formamide, (meth)acrylonitrile, acreolin, 1- and 2-hydroxy propyl (meth)acrylate, vinyl acetate, glycidyl (meth)acrylate and maleic acid. Hydrophobic macromonomers may also be used and include monomethoxy and monohydroxy poly(butylene oxide) (meth)acrylate and other hydrophobic polymers with terminal functional groups which can be post-functionalised with a polymerisable moiety such as (meth)acrylate, (meth)acrylamide or styrenic groups.

Responsive monofunctional monomers include 2- and 4-vinyl pyridine, vinyl benzoic acid, N-isopropyl(meth)acrylamide, tertiary amine (meth)acrylates and (meth)acrylamides such as 2-(dimethyl)aminoethyl (meth)acrylate, 2-(diethylamino)ethyl (meth)acrylate, diisopropylaminoethyl (meth)acrylate, mono-t-butylaminoethyl (meth)acrylate and N-morpholinoethyl (meth)acrylate, vinyl aniline, vinyl pyridine, N-vinyl carbazole, vinyl imidazole, hydroxyethyl (meth)acrylate, hydroxypropyl (meth)acrylate and vinyl benzoic acid. Responsive macromonomers may also be used and include monomethoxy and monohydroxy poly(propylene oxide) (meth)acrylate and other responsive polymers with terminal functional groups which can be post-functionalised with a polymerisable moiety such as (meth)acrylate, (meth)acrylamide or styrenic groups.

The multifunctional monomer or brancher may comprise a molecule containing at least two vinyl groups which may be polymerised via addition polymerisation. The molecule may be hydrophilic, hydrophobic, amphiphilic, neutral, cationic, zwitterionic, oligomeric or polymeric. Such molecules are often known as crosslinking agents in the art and may be prepared by reacting any di- or multifunctional molecule with a suitably reactive monomer. Examples include di- or multivinyl esters, di- or multivinyl amides, di- or multivinyl aryl compounds, di- or multivinyl alk/aryl ethers. Typically, in the case of oligomeric or polymeric di- or multifunctional branching agents, a linking reaction is used to attach a polymerisable moiety to a di- or multifunctional oligomer or polymer. The brancher may itself have more than one branching point, such as T-shaped divinylic oligomers or polymers. In some cases, more than one multifunctional monomer may be used. When the multifunctional monomer is providing the necessary hydrophilicity in the copolymer, it is preferred that L is a residue of a hydrophilic multifunctional monomer, preferably having a molecular weight of at least 1000 Daltons.

The corresponding allyl monomers to those listed above can also be used where appropriate.

Preferred multifunctional monomers include but are not limited to divinyl aryl monomers such as divinyl benzene; (meth)acrylate diesters such as ethylene glycol di(meth)acrylate, propyleneglycol di(meth)acrylate and 1,3-butylenedi(meth)acrylate; polyalkylene oxide di(meth)acrylates such as tetraethyleneglycol di(meth)acrylate, poly(ethyleneglycol) di(meth)acrylate and poly(propyleneglycol) di(meth)acrylate; divinyl (meth)acrylamides such as methylene bisacrylamide; silicone-containing divinyl esters or amides such as (meth)acryloxypropyl-terminated poly(dimethylsiloxane); divinyl ethers such as poly(ethyleneglycol)divinyl ether; and tetra- or tri-(meth)acrylate esters such as pentaerythritol tetra(meth)acrylate, trimethylolpropane tri(meth)acrylate or glucose di- to penta(meth)acrylate. Further examples include vinyl or allyl esters, amides or ethers of pre-formed oligomers or polymers formed via ring-opening polymerisation such as oligo(caprolactam), oligo(caprolactone), poly(caprolactam) or poly(caprolactone), or oligomers or polymers formed via a living polymerisation technique such as oligo- or poly(1,4-butadiene).

Macrocrosslinkers or macrobranchers (multifunctional monomers having a molecular weight of at least 1000 Daltons) are generally formed by linking a polymerisable moiety, such as a vinyl or aryl group, to a pre-formed multifunctional polymer via a suitable linking unit such as an ester, an amide or an ether. Examples of suitable polymers include di-functional poly(alkylene oxides) such as poly(ethyleneglycol) or poly(propyleneglycol), silicones such as poly(dimethylsiloxane)s, polymers formed by ring-opening polymerisation such as poly(caprolactone) or poly(caprolactam) or poly-functional polymers formed via living polymerisation such as poly(1,4-butadiene).

Preferred macrobranchers include poly(ethyleneglycol) di(meth)acrylate, poly(propyleneglycol) di(meth)acrylate, methacryloxypropyl-terminated poly(dimethylsiloxane), poly(caprolactone) di(meth)acrylate and poly(caprolactam) di(meth)acrylamide.

Hydrophilic branchers contain hydrogen bonding and/or permanent or transient charges. Hydrophilic branchers include methylene bisacrylamide, glycerol di(meth)acrylate, glucose di- and tri(meth)acrylate, oligo(caprolactam) and oligo(caprolactone). Multi end-functionalised hydrophilic polymers may also be functionalised using a suitable polymerisable moiety such as a (meth)acrylate, (meth)acrylamide or styrenic group.

Hydrophobic branchers include divinyl benzene, (meth)acrylate esters such as ethyleneglycol di(meth)acrylate, propyleneglycol di(meth)acrylate and 1,3-butylene di(meth)acrylate, oligo(ethylene glycol) di(meth)acrylates such as tetraethylene glycol di(meth)acrylate, tetra- or tri- (meth)acrylate esters such as pentaerthyritol tetra(meth)acrylate, trimethylolpropane tri(meth)acrylateand glucose penta(meth)acrylate. Multi end-functionalised hydrophobic polymers may also be functionalised using a suitable polymerisable moiety such as a (meth)acrylate, (meth)acrylamide or styrenic group.

Multifunctional responsive polymers may also be functionalised using a suitable polymerisable moiety such as a (meth)acrylate, (meth)acrylamide or styrenic group such as poly(propylene oxide) di(meth)acrylate.

Thus, L is a residue of a multifunctional monomer as described above.

The copolymer must contain a multifunctional monomer. In other words, 1 is ≥ 0.05 in formula (I). It is preferably 0.05 to 50, more preferably 0.05 to 40, particularly 0.05 to 30 and especially 0.05 to 15.

It is preferred that R and R' in formula (I) each independently represent a hydrogen atom or a C1-4 alkyl group.

X and X' each independently represent a terminal group derived from a termination reaction. During conventional radical polymerisation, some inherent and unavoidable termination reactions occur. Common termination reactions between free-radicals are typically bimolecular combination and disproportionation reactions which vary depending on the monomer structure and result in the annihilation of two radicals. Disproportionation reactions are thought to be the most common, especially for the polymerisation of (meth)acrylates, and involve two dead primary chains, one with a hydrogen terminus (X or X' = H) and the other with a carbon-carbon double bond (X or X' = -C=CH2). When the termination reaction is a chain transfer reaction, X or X' is typically an easily abstractable atom, commonly hydrogen. Thus, for instance, when the chain transfer agent is a thiol, X and/or X' can be a hydrogen atom.

As will be apparent from formula (I), m + I equals the number of polymerisable groups in L and n is the total number of repeat units in the copolymer. Preferably, m is 1 to 6, more preferably 1 to 4.

### Synthesis of the Copolymers

As mentioned above, the copolymers of the invention are prepared by an addition polymerisation method. This process is a conventional free-radical polymerisation process.

To produce a branched polymer by a conventional radical polymerisation process, a monofunctional monomer is polymerised with a multifunctional monomer or branching agent in the presence of a chain transfer agent and free-radical initiator.

The polymerisations may proceed via solution, bulk, suspension, dispersion and emulsion procedures.

Thus, the invention also provides a method of preparing an amphiphilic branched copolymer as defined above by an addition (preferably free-radical) polymerisation process, which comprises mixing together
(a) at least one monofunctional monomer as previously defined;
(b) at least 0.05 mole % (based on the number of moles of monofunctional monomer) of a multifunctional monomer as previously defined;
(c) a chain transfer agent as previously defined; and
(d) an initiator, optionally but preferably a free-radical initiator as previously defined;
and subsequently reacting said mixture to form a branched non-crosslinked copolymer.

### Synthesis of the Particles

Synthesis of conventional branched copolymer particles (non-responsive) in aqueous solution is achieved by dissolving the amphiphilic branched copolymer as a concentrated solution (typically above 2 weight %) in a water-miscible solvent (often THF or lower alcohols). After complete dissolution, water is added slowly with stirring to promote particle formation. The quantity of water depends on the application. After particle formation, the co-solvent is optionally removed by evaporation or dialysis to give a purely aqueous solution of branched polymer particles. In some instances, it is possible to dissolve the amphiphilic branched copolymers directly into water. In this case, a pre-determined weight of the polymer is added to a vessel and a pre-determined volume of water is added. The slurry is stirred until complete dissolution of the branched copolymer.

The method of formation of responsive branched polymer particles in aqueous solution is dependent on the desired response, i.e. temperature, pH or ionic strength. However, in all cases the branched copolymers are solubilised directly in water at a pre-determined concentration under suitable pH, temperature and ionic strength conditions. Particle formation is then promoted by changing the external factor, that is, the pH, temperature or by adding/ removing electrolyte, respectively.

The concentration of amphiphilic branched copolymers for preparation of non-responsive or responsive branched polymer particles is dependent on the precise polymer composition and desired application but can vary from 1 x 10⁻⁶ % to 75% by weight.

Thus, the invention also provides a method of preparing a branched copolymer particle as defined above which comprises adding an amphiphilic branched copolymer as defined above to a solvent and, optionally, removing the solvent.

### Compositions

The copolymer or branched copolymer particles according to the present invention may be incorporated into compositions containing only a carrier or diluent (which may comprise solid and/or liquid) or also comprising an active ingredient. Preferably, the carrier is an aqueous solution. Thus, one preferred composition comprises an aqueous solution containing a branched copolymer particle as defined above. The copolymer or particles are typically included in said compositions at levels of from 1 x 10-6 % to 75% by weight, preferably from 0.01% to 50%, particularly from 0.01% to 25% by weight, preferably from 0.05% to 15%, more preferably from 0.1% to 10% and especially from 0.1% to 5%.

The compositions of the invention may be in any physical form e.g. a solid such as a powder or granules, a tablet, a solid bar, a paste, gel or liquid, especially, an aqueous based liquid.

The copolymers of the invention may exhibit properties, such as viscosity reduction, increased deposition, increased particular/molecular dispersion, increased lubrication and increased solubility for a particular molecular weight when compared to a linear analogous polymer. The architecture of the polymers can also have an effect on the pKa of polyacids or bases. Thus, the copolymers and particles of the invention may be used in a variety of applications.

### Uses

The branched copolymer particles according to the invention have numerous wide-ranging applications on account of their amphiphilic character, unique structures, architecture and solution properties.

Emulsions are routinely used in many commercial applications, such as foods and home and personal care products, and are often stabilised by conventional small molecule surfactants. Particles have also been used to stabilise emulsions for over a century. Such particles are referred to as Particulate, Pickering or Ramsden emulsifiers and are commonly inorganic species. Pickering emulsifiers often produce cheaper, more robust, reproducible formulations which are less toxic. Recently, organic particles have been investigated as efficient Pickering emulsifiers as they offer huge scope in terms of functionality, size, architecture and tailored properties. It has now been found that branched copolymer particles according to the invention can act as efficient Pickering emulsifiers. Moreover, in some instances the emulsions respond to changes in pH.

Hydrophobic actives, such as drugs and fragrances, are often only useful if they can be stabilised in hydrophilic environments, such as the body or in aqueous home and personal care formulations, for sustained periods of time. Consequently significant efforts have been made towards developing suitable vehicles for such actives. In this context, self-assembled polymer structures, such as micelles, have received significant attention due to their functionality and size. Encapsulation of actives within these polymeric vehicles followed by their controlled and/or triggered release has been routinely used as a test for their suitability. Pyrene fluorescence is often used as a model to demonstrate (1) encapsulation of a hydrophobic compound and (2) its release. The fluorescence spectrum of pyrene changes depending on the hydrophilicity of its environment. Ultimately, a ratio of the intensity of two peaks in the pyrene emission spectrum (referred to as the I1/I3 ratio) indicates whether the pyrene is in a hydrophilic or hydrophobic environment (low I1/I3 ratios indicates pyrene is in a hydrophobic environment and high I1/I3 ratios indicates pyrene is in a hydrophilic environment). It has now been found that branched pH-responsive copolymer particles according to the invention can act as efficient encapsulation vehicles for a model hydrophobic active and its controlled and triggered release.

The synthesis of nano-sized inorganic colloids via "bottom-up" routes has been much studied in materials chemistry. [N.B. The "bottom-up" approach describes structures (often microscopic in dimensions) which have been assembled from smaller molecules as opposed to the crushing or milling of "large" species to produce structures which are smaller than the original species ("top-down" approach)].One approach has been to use a nano-sized template for the precipitation of the colloids from solution. However, it has now been found that branched copolymer particles according to the invention can act as extremely efficient nanoreactors, for instance, for the preparation of gold colloids via the bottom-up approach.

Weak polyacids and polybases are polyelectrolytes which are not completely ionised within the pH range of 1-14. The pH at which half of the monomer units are charged and half are uncharged is referred to as the pKa (for acids) or pKb (for bases). The pKa of polyelectrolytes is known to be different to the pKa of the corresponding monomers due to charge repulsion between the monomeric units within the polymer. In theory, any factor which affects the relative location of charges in a polymer could affect the pKa. It has now been found that the pKa of polyelectrolytes can vary as a function of the polymer architecture. Essentially, the pKa of polyacids (and the conjugate-acid of polybases) has been found to change with the degree of branching. Thus, essentially identical pH-responsive branched polymer particles can release hydrophobic actives at different pH values merely by changing the degree of branching of the polymer.

In view of the above, the invention also provides the use of an amphiphilic copolymer as defined above or a branched copolymer particle as defined above as an encapsulating agent, a nanoreactor, a Pickering emulsifier, controlled release agent and/or triggered release agent.

The present invention will now be explained in more detail by reference to the following non-limiting examples.

### Examples

In the following examples, copolymers are described using the following nomenclature:
(MonomerG)_{g} (Monomer J)ⱼ (Brancher L)ₗ (Chain Transfer Agent)_{d}
where the values in subscript are the molar ratios of each constituent normalised to give the monofunctional monomer values as 100, i.e. g + j = 100. The degree of branching or branching level is denoted by 1 and d refers to the molar ratio of the chain transfer agent.

For example:
Methacrylic acid₁₀₀ Ethyleneglycol dimethacrylate₁₅ Dodecane thiol₁₅ would describe a polymer containing methacrylic acid : ethyleneglycol dimethacrylate : dodecane thiol at a molar ratio of 100:15:15.

Molecular weight determination was performed by GPC using SEC-MALLs on a Wyatt chromatograph with either tetrahydrofuran (THF) or 20% aqueous methanol with 0.05M NaNO₃ adjusted to pH 9 as the organic or aqueous eluants respectively, at a flow rate of 1 ml per minute and a sample injection volume of 100 µl. The instrument was fitted with a Polymer Laboratories PL mixed C and mixed D column set at 40°C. Detection was carried out using a Wyatt Dawn DSP laser photometer with a Jasco RI detector.

### Example 1

Synthesis of branched poly[diethylaminoethyl methacrylate-co-poly(ethyleneglycol)22 monomethacrylate-co-ethyleneglycol dimethacrylate]

### DEA_{95/} (PEG₂₂MA) ₅EGDMA₁₅DDT₁₅

Diethylaminoethyl methacrylate (DEA) (8.000 g, 43 mmol), PEG₂₂MA (2.162 g, 2.2 mmol), ethyleneglycol dimethacrylate (EGDMA) (1.350 g, 6.8 mmol) and dodecanethiol (DDT) (1.62 mL, 6.8 mmol) were dissolved in ethanol (100 mL) and degassed by nitrogen purge for 30 minutes. After this time the reaction vessel was subjected to a positive nitrogen flow and heated at 60°C. Once the temperature had equilibrated, AIBN (110 mg, 1 wt. % based on total monomer) was added to start the polymerisation and the reaction mixture was left stirring for 18 hours. Ethanol was removed by vacuum distillation and the resulting clear, oily polymers were washed with very cold petroleum. The polymer was dried for 48 hours in a vacuum oven to give 85 % yield. GPC: M_{w}: 11,900 g.mol-1 calculated from the light scattering signal; Eluant: THF

### Comparative Example 1

Synthesis of linear poly[diethylaminoethyl methacrylate-co-poly(ethyleneglycol)22 monomethacrylate] (linear polymer analogous to the branched copolymer of Example 1)

### DEA_{95/} (PEG₂₂MA) ₅DDT_{2.5}

Diethylaminoethyl methacrylate (DEA) (8.000 g, 43 mmol), PEG22MA (2.162 g, 2.2 mmol) and dodecanethiol (DDT) (0.27 mL, 1.1 mmol) were dissolved in ethanol (100 mL) and degassed by nitrogen purge for 30 minutes. After this time the reaction vessel was subjected to a positive nitrogen flow and heated at 60°C. Once the temperature had equilibrated, AIBN (101 mg, 1 wt. % based on total monomer) was added to start the polymerisation and the reaction mixture was left stirring for 40 hours. Ethanol was removed by vacuum distillation and the resulting clear, oily polymers were washed with very cold petroleum. The polymer was dried for 48 hours in a vacuum oven to give 90 % yield. GPC: M_{w}: 35,300 g.mol-1: calculated from the light scattering detector. Eluant: THF

### Example 2

Synthesis of branched poly[dimethylaminoethyl methacrylate-co-poly(ethyleneglycol)22 monomethacrylate-co-ethyleneglycol dimethacrylate]

### DMA₉₅/ (PEG₂₂MA) ₅EGDMA₁₅TG₁₅

Dimethylaminoethyl methacrylate (DMA) (8.949 g, 57 mmol), PEG₂₂MA (3.000 g, 3 mmol), ethyleneglycol dimethacrylate (EGDMA) (1.782 g, 9 mmol) and thioglycerol (TG) (0.972 mL, 9 mmol) were dissolved in ethanol (120 mL) and degassed by nitrogen purge for 30 minutes. After this time the reaction vessel was subjected to a positive nitrogen flow and heated at 60°C. Once the temperature had equilibrated, AIBN (137 mg, 1 wt. % based on total monomer) was added to start the polymerisation and the reaction mixture was left stirring for 24 hours. Ethanol was removed by vacuum distillation and the resulting clear, oily polymers were washed with very cold petroleum. The polymer was dried for 48 hours in a vacuum oven to give 80 % yield.
GPC: M_{w}: 23,500 g.mol⁻¹ calculated from the light scattering detector. Eluant: THF

### Comparative Example 2

Synthesis of linear poly[dimethylaminoethyl methacrylate-co-poly(ethyleneglycol)22 monomethacrylate] (linear polymer analogous to the branched copolymer of Example 2)

### DMA₉₅/ (PEG₂₂MA) ₅TG_{2.5}

Dimethylaminoethyl methacrylate (DMA) (8.949 g, 57 mmol), PEG₂₂MA (3.000 g, 3 mmol) and thioglycerol (TG) (0.162 g, 1.5 mmol) were dissolved in ethanol (120 mL) and degassed by nitrogen purge for 30 minutes. After this time the reaction vessel was subjected to a positive nitrogen flow and heated at 60°C. Once the temperature had equilibrated, AIBN (120 mg, 1 wt. % based on total monomer) was added to start the polymerisation and the reaction mixture was left stirring for 24 hours. Ethanol was removed by vacuum distillation and the resulting clear, oily polymers were washed with very cold petroleum. The polymer was dried for 48 hours in a vacuum oven to give 80 % yield.
GPC: M_{w}: 16,000 g.mol-1 calculated from the light scattering detector. Eluant: THF

### Example 3

### (A) Preparation of aqueous solutions of the DEA₉₅/(PEG₂₂MA) ₅EGDMA₁₅TG₁₅ branched copolymers synthesised in Example 1 and the DEA₉₅/ (PEG₂₂MA) ₅TG_{2.5} linear copolymers synthesised in Comparative Example 1 at low pH General procedure

The copolymer (50 mg) was added to water (10 mL) and the pH was adjusted to pH 2 using 1M hydrochloric acid solution at room temperature, and the mixture agitated until complete dissolution was achieved. This gave a 0.5 weight % aqueous solution.

### (B) Preparation of aqueous solutions of the DEA₉₅/ (PEG₂₂MA) ₅EGDMA₁₅TG₁₅ branched copolymers synthesised in Example 1 and the DEA₉₅/ (PEG₂₂MA) ₅TG_{2.5} linear copolymers synthesised in Comparative Example 1 at high pH

### General procedure

A 5 mL aliquot of the low pH solution prepared in Example 3(A) was taken and to this was added aqueous sodium hydroxide until pH 10 was reached. This gave a 0.5 weight % aqueous solution.

### Characterisation

Aqueous solution behaviour as a function of pH. 1H NMR studies at pH 10 and pH 2 reveal that the DEA residues are hydrated at low pH when the DEA is in its cationic form, but are dehydrated at high pH when the DEA is neutral. At pH 2, peaks assigned to the protonated DEA and PEO residues are clearly visible (δ 1.2-1.5, 3.1-3.4, 3.4-3.5 and 4.2-4.4 and δ 3.5-3.7, respectively). However, at pH 10 peaks assigned only to PEO are visible at δ 3.5-3.7. This confirms the pH-responsive hydration of DEA residues in the branched copolymers.

### Particle diameter in aqueous solution.

Dynamic light scattering studies (1.0 w/v % solutions) of the linear polymers show self-assembled polymer chains (micelles) of around 40-50 nm at high pH. These dissociate into unimers (individual solvated polymer chains) when they are protonated at low pH. The 15 % branched polymer shows a particle size of around 25 nm at high pH. However, these swell at low pH to give a particle size of around 40-50 nm. The variation in particle diameter as a function of solution pH is in excellent agreement with previous studies on SCL micelles, microgels and nanogels.

### Example 4

(A) Preparation of aqueous solutions of the DMA₉₅/ (PEG₂₂MA) ₅EGDMA₁₅TG₁₅ branched copolymers synthesised in Example 2 and the DMA₉₅/ (PEG₂₂MA) ₅TG_{2.5} linear copolymers synthesised in Comparative Example 2 at low pH

### General procedure

The polymer (50 mg) was added to water (10 mL) and the pH was adjusted to pH 2 using 1M HCl solution at room temperature, and the mixture agitated until complete dissolution was achieved. This gave a 0.5 weight % aqueous solution.

### (B) Preparation of aqueous solutions of the DMA₉₅/ (PEG₂₂MA) ₅EGDMA₁₅TG₁₅ branched copolymers synthesised in Example 2 and the DMA₉₅/ (PEG₂₂MA) ₅TG_{2.5} linear copolymers synthesised in Comparative Example 2 at high pH General procedure

A 5 mL aliquot of the low pH solution prepared in Example 4(A) above was taken and to this was added aqueous sodium hydroxide until pH 10 was reached. This gave a 0.5 weight% aqueous solution.

### Example 5

### Preparation of Pickering emulsions from the aqueous solutions (at pH 2 and pH10) of copolymer particles based on DMA₉₅/ (PEG₂₂MA) ₅EGDMA₁₅TG₁₅ branched copolymers and DMA₉₅/ (PEG₂₂MA) ₅TG_{2.5} linear copolymers prepared in Example 4

### General method:

To the aqueous solution of either the linear or branched polymer particles (5 mL) at either pH 2 or pH 10 (prepared as described in Example 4 above) was added n-dodecane (5 mL). This two-phase mixture was subjected to high shear at 12,000 rpm for 2 minutes (using an Ultra-Thurax homogeniser). This resulted in opaque white emulsions which were left to equilibrate overnight. All emulsions were dodecane-in-water.

### Characterisation

The linear pH-responsive polymer gave long term emulsion stability at pH 10, however no stable emulsion was formed at pH 2. Conversely, under identical conditions, the branched pH-responsive polymer gave stable emulsions at both pH 2 and pH 10. Optical microscopy revealed the average droplet size of the emulsions was typically larger for the emulsions formed at low pH. The linear polymer gave polydisperse oil-in-water droplets of 5-100 µm at pH 9 and no emulsion at pH 2. However, the branched polymer gave well-defined emulsion droplets of around 5-10 µm at pH 9 and slightly larger droplets of 5-50 µm at pH 2. Optical microscopy after 3 weeks also revealed that emulsions formed using the branched polymer particles at pH 9 were significantly more stable towards flocculation/creaming than the analogous linear polymers. Thus, emulsion droplet size was shown to be dependent on the solution pH for emulsions stabilised with pH-responsive Pickering emulsions.

### Example 6

### Use as Nanoreactors

A 0.5 wt % solution of DEA₉₅/(PEG₂₂MA)₅EGDMA₁₅DDT₁₅ branched copolymers (as synthesised in Examples 1 and 3 respectively) (20 mg polymer in 4 mL water, pH 2) was adjusted to pH 10 using dilute sodium hydroxide. To this stirred solution was added aqueous hydrogen tetrachloroaurate (III) hydrate solution in stoichiometric quantities to the DEA residues. After approximately 2 hours the gold solution was spontaneously reduced and gold colloids were formed within the polymer shell. The reduction was accompanied by a change in solution colour from yellow to deep red. Transmission electron microscopy of dilute solutions of the reaction confirmed the localised precipitation of spherical Au⁰ colloids within the branched polymer (average colloid size was 2-6 nm).

### Example 7

### Effect of architecture on pKₐ

The pKa of the DEA₉₅/ (PEG₂₂MA) ₅EGDMA₁₅DDT₁₅ (synthesised in Example 1) and DEA₉₅/ (PEG₂₂MA) ₅EGDMA_{2.5}DDT_{2.5} (synthesised in accordance with the method of Example 1) branched polybases and the DEA₉₅/ (PEG₂₂MA) ₅DDT_{2.5} linear polybase (synthesised in Comparative Example 1) were determined by titration. To a dilute solution of the polymer (0.25 wt %) at pH 1.5, was added 0.05 M sodium hydroxide dropwise. From the plot of pH vs. volume of sodium hydroxide, the pKₐ of the polybase (conjugate acid form of the polybase) was determined. The calculated pKₐ for the linear polymer was 7.07, 6.89 for the 2.5 % branched polymer and 6.57 for the 15 % branched polymer. Thus, linear polybases are stronger acids than branched polybases. These results were confirmed by titrations with other branched and linear polyacids and polybases. Therefore, amongst other applications, these polymers can regulate the pH of a solution as a function of their concentration and degree of branching. Thus, essentially identical polymers can promote the release of hydrophobic actives at different pH values simply by varying the degree of branching.

### Example 8

### Use as Encapsulation and Triggered release agents

The release of a model hydrophobic active (pyrene) was monitored by fluorescence spectroscopy as a function of solution pH for the linear polybase DEA₉₅/(PEG₂₂MA) ₅DDT_{2.5} (synthesised in Comparative Example 1) and the branched polybases DEA₉₅/(PEG₂₂MA) ₅EGDMA_{2.5}DDT_{2.5} (synthesised in accordance with the method of Example 1) and DEA₉₅/ (PEG₂₂MA) ₅EGDMA₁₅DDT₁₅ (synthesis and particle formation described in Examples 1 and 3 respectively).

0.1 wt % aqueous solutions (20 mg polymer in 20 mL water, pH 2) of the branched and linear copolymers were made at pH 2. 6.0 x 10⁻⁷ moles of pyrene were dissolved in each polymer solution and the pH was increased to pH 12 using dilute sodium hydroxide to promote in-situ formation of the core-shell structures. Pyrene emission spectra were recorded at 25°C using a wavelength of 333 nm. The emission and excitation slit widths were set at 2.5 and 8 nm, respectively. The I₁/I₃ ratio was plotted vs. the solution pH for the linear, 2.5 % branched and 15 % branched copolymers.

At high pH (above pH 7), the linear, 2.5 % branched and 15 % branched copolymers all had I₁/I₃ ratios of approximately 1.3, indicating that the pyrene has been encapsulated in the hydrophobic polymer cores. On lowering the pH below the pKₐ of the DEA residues, the I_{1/}I₃ ratios increased in all cases. However, at low pH, the I_{1/}I₃ ratio decreased systematically as the degree of branching increased indicating that pyrene is released more slowly from the branched copolymers than the linear copolymers.

### _{Example 9}

### Use as Controlled release agents

Identical release experiments were performed to those described in Example 8. However, copolymers with a hydrophilic CTA (1-thioglycerol, TG) were used. The composition of the analogous linear, low branched and high branched polymers were: DEA₉₅/ (PEG₂₂MA)₅TG_{2.5} (synthesised as a linear control), DEA₉₅/ (PEG₂₂MA) ₅EGDMA_{2.5}TG_{2.5} and DEA₉₅/ (PEG₂₂MA) ₅EGDMA₁₅TG₁₅, respectively. All these polymers were synthesised in accordance with methods set out in Example 1 and Comparative Example 1. However, dodecanethiol chain transfer agent was replaced by thioglycerol chain transfer agent in precisely the same molar quantities. In this case, at high pH, the I₁/I₃ ratios were approximately 1.35 for all three copolymers and they all increased to around 1.7-1.8 at low pH. Thus, in comparison to the triggered release example of Example 8, release of hydrophobic actives can be controlled by merely varying the degree of branching and the hydrophilicity of the CTA. Thus by merely changing the degree of branching and the nature of the CTA used, either immediate triggered release or slow controlled release of a hydrophobic active can be obtained.

## Claims

1. An amphiphilic branched copolymer obtainable by an addition polymerisation process which is the reaction product of:
(a) an initiator, (E and E'),
(b) a compatible chain transfer agent (E and E'),
(c) at least one ethyleneically monounsaturated monomer (G and/or J),
(d) at least one ethyleneically polyunsaturated monomer (L), wherein the mole ratio of (d) to (c) is greater than 0.0005 to 1 and wherein the amphiphilic branched copolymer comprises the general formula 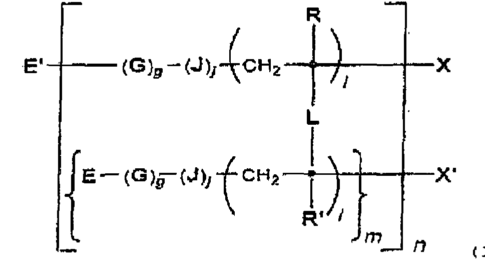 in which
E and E' each independently represent a residue of a chain transfer agent or an initiator;
G and J each independently represent a residue of a monofunctional monomer having one polymerisable double bond per molecule;
L is a residue of a multifunctional monomer having at least two polymerisable double bonds per molecule;
R and R' each independently represent a hydrogen atom or an optionally substituted alkyl group;
X and X' each independently represent a terminal group derived from a termination reaction;
g, j and l represent the molar ratio of each residue normalised so that g + j = 100, wherein g and j each independently represent 0 to 100, and l is ≥ 0.05 ; and
m and n are each independently ≥ 1;
at least one of E, E', G, J, and L is a hydrophilic residue; and
at least one of E, E', G, J, and L is a hydrophobic residue and in which at least one of E, E', G, J, and L is a hydrophilic residue having a molecular weight of at least 1000 Daltons and in which the total hydrophobe content is from 20 to 60 wt% based on the weight of the total polymer.

2. A copolymer according to claim 1 in which one of E and E' represents the residue of a chain transfer agent and the other of E and E' represents the residue of an initiator, in which the chain transfer agent is selected from monofunctional and multifunctional thiols and catalytic chain transfer agents and in which the initiator is an initiator which is suitable for use in a conventional free-radical polymerisation method and in which the initiator is selected from azo- containing molecules, persulfates, redox initiators, peroxides, benzyl ketone and iniferters.

3. A copolymer according to any of the preceding claims, in which the residue of the chain transfer agents comprises 0.05 to 30 mole %, of the copolymer and in which the residue of the initiator comprises 0.01 to 5% w/w and especially 0.01 to 3% w/w, of the copolymer based on the total weight of the monomers.

4. A copolymer according to any one of the preceding claims in which E and/or E' is a residue of a hydrophilic chain transfer agent or a hydrophilic initiator each having a molecular weight of at least 1000 Daltons.

5. A copolymer according to any one of the preceding claims, in which G and J each independently represent a residue of a monofunctional monomer selected from vinyl acids, vinyl acid esters, vinyl aryl compounds, vinyl acid anhydrides, vinyl amides, vinyl ethers, vinyl amines, vinyl aryl amines, vinyl nitriles, vinyl ketones, and derivatives thereof; hydroxyl-containing monomers and monomers which can be post-reacted to form hydroxyl groups; acid- containing or acid functional monomers; zwitterionic monomers; quaternised amino monomers and oligomeric monomers; and corresponding allyl monomers of the aforesaid vinyl monomers and in which G and/or J is a residue of a monofunctional monomer which has a water solubility which is responsive to pH, temperature and/or ionic strength and in which G and/or J is a residue of a hydrophilic monofunctional monomer having a molecular weight of at least 1000 Daltons.

6. A copolymer according to any one of the preceding claims, in which I is 0.05 to 80, 0.05 to 50, preferably 0.05 to 40, more preferably 0.05 to 30 and especially 0.05 to 15.

7. A copolymer according to any one of the preceding claims, in which L is a residue of a multifunctional monomer selected from di- or multivinyl esters, di- or multivinyl amides, di- or multivinyl aryl compounds and di- or multivinyl alk/aryl ethers and in which L is a residue of a multifunctional monomer which has a water solubility which is responsive to pH, temperature and/or ionic strength and in which L is a residue of a hydrophilic multifunctional monomer having a molecular weight of at least 1000 Daltons.

8. A method of preparing a branched amphiphilic copolymer according to any one of the preceding claims by an addition polymerisation process, preferably a free-radical polymerisation process, which comprises mixing together
(a) at least one monofunctional monomer;
(b) at least 0.05 mole % (based on the number of moles of monofunctional monomer) of a multifunctional monomer;
(c) a chain transfer agent; and
(d) an initiator;
and subsequently reacting said mixture to form a branched copolymer.

9. A branched copolymer particle which comprises an amphiphilic branched copolymer according to any one of claims 1 to 7 wherein the particle comprises a hydrophobic core and a hydrophilic shell and in which the particle is a nanoparticle and in which the particle has a diameter of 2 to 600 nm, preferably 2 to 300 nm, more preferably 5 to 100 nm, particularly 5 to 75 nm and especially 10 to 60 nm.

10. A method of preparing a branched copolymer particle according to claim 9, which comprises adding an amphiphilic branched copolymer according to any one of claims 1 to 8 to a solvent and, optionally, removing the solvent.

11. An aqueous solution containing a branched copolymer particle according to claim 9.

12. A composition comprising an amphiphilic copolymer according to any one of claims 1 to 7 and a carrier or a branched copolymer particle according to claim 9 and a carrier in which the carrier is an aqueous solution.

13. Use of an amphiphilic copolymer according to any one of claims 1 to 7 or a branched copolymer particle according to claim 9 as an encapsulating agent, as a nanoreactor, as a Pickering emulsifier, and/or as a triggered release agent.

## Patentansprüche

1. Amphiphiles verzweigtes Copolymers, das durch ein Additionspolymerisationverfahren erhältlich und das Reaktionsprodukt ist von:
(a) einem Initiator (E und E'),
(b) einem verträglichen Kettenübertragungsmittel (E und E'),
(c) mindestens einem ethylenisch monoungesättigten Monomer (G und/oder J),
(d) mindestens einem ethylenisch polyungesättigten Monomer (L), wobei das Molverhältnis von (d) zu (c) mehr als 0,0005 zu 1 beträgt und wobei das amphiphile verzweigte Copolymer die allgemeine Formel 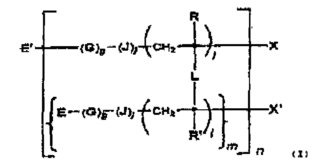 umfasst, wobei
E und E' jeweils unabhängig einen Rest eines Kettenübertragungsmittels oder eines Initiators darstellen;
G und J jeweils unabhängig einen Rest eines monofunktionellen Monomers darstellen, das eine polymerisierbare Doppelbindung pro Molekül aufweist;
L ein Rest eines multifunktionellen Monomers ist, das mindestens zwei polymerisierbare Doppelbindungen pro Molekül aufweist;
R und R' jeweils unabhängig ein Wasserstoffatom oder eine wahlweise substituierte Alkylgruppe darstellen;
X und X' jeweils unabhängig eine endständige Gruppe darstellen, die aus einer Abbruchreaktion stammen;
g, j und I das Molverhältnis von jedem Rest so standardisiert darstellen, dass g + j = 100 ist,
wobei g und j jeweils unabhängig 0 bis 100 darstellen und 1 ≥ 0,05 beträgt; und
m und n jeweils unabhängig ≥ 1 betragen;
mindestens eines von E, E', G, J und L ein hydrophiler Rest ist; und
mindestens eines von E, E', G, J und L ein hydrophober Rest ist und wobei mindestens eines von E, E', G, J und L ein hydrophiler Rest ist, der ein Molekulargewicht von mindestens 1000 Dalton aufweist und wobei der gesamte hydrophobe Gehalt 20 bis 60 Gew.-%, auf das Gewicht des gesamten Polymers bezogen, beträgt.

2. Copolymer nach Anspruch 1, wobei eines von E und E' den Rest eines Kettenübertragungsmittels darstellt und das andere von E und E' den Rest eines Initiators darstellt, wobei das Kettenübertragungsmittel unter monofunktionellen und multifunktionellen Thiolen und katalytischen Kettenübertragungsmitteln ausgewählt ist und wobei der Initiator ein Initiator ist, der zur Verwendung bei einem herkömmlichen Radikalpolymerisationsverfahren geeignet ist und wobei der Initiator unter azohaltigen Molekülen, Persulfaten, Redoxinitiatoren, Peroxiden, Benzylketon und Inifertem ausgewählt ist,

3. Copolymer nach einem der vorhergehenden Ansprüche, wobei der Rest der Kettenübertragungsmittel 0,05 bis 30 Mol-%, auf das Copolymer bezogen, umfasst und wobei der Rest des Initiators 0,01 bis 5 Gew./Gew.-% und insbesondere 0,01 bis 3 Gew./Gew.-%, auf das Copolymer und das Gesamtgewicht der Monomere bezogen, umfasst.

4. Copolymer nach einem der vorhergehenden Ansprüche, wobei E und/oder E' ein Rest eines hydrophilen Kettenübertragungsmittels oder eines hydrophilen Initiators ist, wobei jedes ein Molekulargewicht von mindestens 1000 Dalton aufweist.

5. Copolymer nach einem der vorhergehenden Ansprüche, wobei G und J jeweils unabhängig einen Rest eines monofunktionellen Monomers darstellen ausgewählt unter Vinylsäuren, Vinylsäurestern, Vinylarylverbindungen, Vinylsäureanhydriden, Vinylamiden, Vinylether, Vinylaminen, Vinylarylaminen, Vinylnitrilen, Vinylketonen, und Derivaten davon; hydroxylhaltigen Monomeren und Monomeren, die unter Bildung von Hydroxygruppen nachreagiert werden können; säurehaltigen oder säurefunktionellen Monomeren; zwitterionischen Monomeren; quaternisierten Aminomonomeren und Oligomeren; und entsprechenden Allylmonomeren der obigen Vinylmonomere und wobei G und/oder J ein Rest eines monofunktionellen Monomers ist, das eine Wasserlöslichkeit aufweist, die auf den pH-Wert, die Temperatur und/oder die Ionenstärke anspricht und wobei G und/oder J ein Rest eines hydrophilen monofunktionellen Monomers ist, das ein Molekulargewicht von mindestens 1000 aufweist.

6. Copolymer nach einem der vorhergehenden Ansprüche, wobei I 0,05 bis 80, 0,05 bis 50, bevorzugt 0,05 bis 40, noch bevorzugter 0,05 bis 30 und insbesondere 0,05 bis 15 beträgt.

7. Copolymer nach einem der vorhergehenden Anspruch, wobei L ein Rest eines multifunktionellen Monomers ist ausgewählt unter Di- oder Multivinylestern, di- oder Multivinylamidcn, Di- oder Multivinylarylverbindugnen und Di- oder Multivinylalk/arylethern und wobei L ein Rest eines multifunktionellen Monomers ist, das eine Wasserlöslichkeit aufweist, die auf den pH-Wert, die Temperatur und/oder die Ionenstärke anspricht und wobei L ein Rest eines hydrophilen multifunktionellen Monomers ist, das ein Molekulargewicht von mindestens 1000 aufweist.

8. Verfahren zum Herstellen eines verzweigten amphiphilen Copolymers nach einem der vorhergehenden Ansprüche durch ein Additionspolymerisationverfahren, bevorzugt ein Radikalpolymerisationsverfahren, das das Zusammenmischen von
(a) mindestens einem monofunktionellen Monomer;
(b) mindestens 0,05 Mol% (auf die Anzahl von Molen von monofunktionellen) Monomer bezogen) eines multifunktionellen Monomers;
(c) einem Kettenübertragungsmittel; und
(d) einem Initiator;
und das darauffolgende Regieren der Mischung unter Bildung eines verzweigten Copolymers umfasst.

9. Verzweigtes Copolymerteilchen, das ein amphiphiles verzweigtes Copolymer nach einem der Ansprüche 1 bis 7 umfasst, wobei das Teilchen einen hydrophoben Kern und eine hydrophile Schale umfasst und wobei das Teilchen ein Nanoteilchen ist und wobei das Teilchen einen Durchmesser von 2 bis 600 nm, bevorzugt 2 bis 300 nm, noch bevorzugter 5 bis 100 nm, insbesondere 5 bis 75 nm und besonders 10 bis 60 nm aufweist.

10. Verfahren zum Herstellen eines verzweigten Copolymerteilchens nach Anspruch 9, welches das Zusetzen eines amphiphilen verzweigten Copolymers nach einem der Ansprüche 1 bis 8 zu einem Lösungsmittel und wahlweise das Entfernen des Lösungsmittels umfasst.

11. Wässrige Lösung, die ein verzweigtes Copolymerteilchen nach Anspruch 9 enthält.

12. Zusammensetzung umfassend ein amphiphiles Copolymer nach einem der Ansprüche 1 bis 7 und einen Träger oder ein verzweigtes Copolymerteilchen nach Anspruch 9 und einen Träger, wobei der Träger eine wässrige Lösung ist.

13. Verwendung eines amphiphilen Copolymers nach einem der Ansprüche 1 bis 7 oder eines verzweigten Copolymerteilchens nach Anspruch 9 als Verkapselungsmittel, als Nanoreaktor, als Pickering-Emulgator und/oder als ausgelöstes Trennmittel.

## Revendications

1. Copolymère ramifié amphiphile pouvant être obtenu par un procédé de polymérisation par addition qui est le produit réactionnel de:
(a) un initiateur (E et E'),
(b) un agent compatible de transfert de chaîne (E et E'),
(c) au moins un monomère éthyléniquement monoinsaturé (G et/ou J),
(d) au moins un monomère éthyléniquement polyinsaturé (L), dans lequel le rapport molaire de (d) à (c) est supérieur à 0,0005 à 1 et dans lequel le copolymère ramifié amphiphile comprend la formule générale 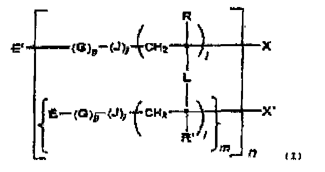 dans laquelle
E et E' représentent chacun indépendamment un résidu d'un agent de transfert de chaîne ou un initiateur;
G et J représentent chacun indépendamment un résidu d'un monomère monofonctionnel ayant une double liaison polymérisable par molécule;
L est un résidu d'un monomère multifonctionnel ayant au moins deux doubles liaisons polymérisables par molécule;
R et R' représentent chacun indépendamment un atome d'hydrogène ou un groupe alkyle optionellement substitué;
X et X' représentent chacun indépendamment un groupe terminal dérivé d'une réaction de terminaison;
g, j et I représentent le rapport molaire de chaque résidu normalisé afin que g+j=100,
dans lequel g et j représentent chacun indépendamment 0 à 100, et I est ≥ 0,05; et
m et n prennent chacun indépendamment une valeur ≥ 1;
au moins l'un parmi E, E', G, J, et L est un résidu hydrophile; et
au moins l'un parmi E, E', G, J, et L est un résidu hydrophobe et dans lequel au moins l'un parmi E, E', G, J, et L est un résidu hydrophile ayant un poids moléculaire d'au moins 1000 Daltons et dans lequel la teneur hydrophobe totale est de 20 à 60 % en pds basée sur le poids du polymère total.

2. Copolymère selon la revendication 1, dans lequel l'un parmi E et E' représente le résidu d'un agent de transfert de chaîne et l'autre parmi E et E' représente le résidu d'un initiateur, dans lequel l'agent de transfert de chaîne est choisi parmi les thiols et les agents de transfert de chaîne catalytiques monofonctionnels et multifonctionnels et dans lequel l'initiateur est un initiateur qui convient à l'utilisation dans un procédé classique de polymérisation radicalaire et dans lequel l'initiateur est choisi parmi les molécules contenant un groupe azoïque, les persulfates, les initiateurs rédox, les peroxydes, la benzyl cétone et les agents d'amorçage de type iniferters.

3. Copolymère selon l'une quelconque des revendications précédentes, dans lequel le résidu des agents de transfert de chaîne comprend 0,05 à 30 % en mole du copolymère et dans lequel le résidu de l'initiateur comprend 0,01 à 5 % pds/pds et spécialement 0,01 à 3 % pds/pds, du copolymère basé sur le poids total des monomères,

4. Copolymère selon l'une quelconque des revendications précédentes, dans lequel E et/ou E' est(sont) un résidu d'un agent de transfert de chaîne hydrophile ou d'un initiateur hydrophile ayant chacun un poids moléculaire d'au moins 1000 Daltons.

5. Copolymère selon l'une quelconque des revendications précédentes, dans lequel G et J représentent chacun indépendamment un résidu d'un monomère monofonctionnel choisi parmi les acides vinyliques, les esters d'acide vinylique, les composés de vinyl aryle, les anhydrides d'acide vinylique, les amides de vinyle, les éthers vinyliques, les amines vinyliques, les amines de vinyl aryle, les nitriles de vinyle, les vinyl cétones et les dérivés de ceux-ci; les monomères contenant un groupe hydroxyle et les monomères qui peuvent être placés en post-réaction pour former des groupes hydroxyles; les monomères contenant un acide ou une fonctionnalité acide; les monomères zwitterioniques, les monomères aminés quaternisés et les monomères oligomériques; et les monomères d'allyle correspondants des monomères vinyliques précédemment mentionnés et dans lesquels G et/ou J est(sont) un résidu d'un monomère monofonctionnel qui a une solubilité dans l'eau sensible au pH, à la température et/ou à la force ionique et dans lequel G et/ou J est(sont) un résidu d'un monomère monofonctionnel hydrophile ayant un poids moléculaire d'au moins 1000 Daltons.

6. Copolymère selon l'une quelconque des revendications précédentes, dans lequel I est 0,05 à 80, 0,05 à 50, de préférence 0,05 à 40, plus préférablement 0,05 à 30 et spécialement 0,05 à 15.

7. Copolymère selon l'une quelconque des revendications précédentes, dans lequel L est un résidu d'un monomère multifonctionnel choisi parmi les ester di- ou multivinyliques, les amides di- ou multivinyliques, les composés aryliques di- ou multivinyliques et les éthers d'ale/aryle di- ou multivinyliques et dans lequel L est un résidu d'un monomère multifonctionnel qui a une solubilité dans l'eau sensible au pH, à la température et/ou à la force ionique et dans lequel L est un résidu d'un monomère multifonctionnel hydrophile ayant un poids moléculaire d'au moins 1000 Daltons.

8. Procédé de préparation d'un copolymère amphiphile ramifié selon l'une quelconque des revendications précédentes par un procédé de polymérisation par addition, de préférence un procédé de polymérisation radicalaire, qui comprend le mélange conjointement
(a) d'au moins un monomère monofonctionnel;
(b) d'au moins 0,05 % en mole (basé sur le nombre de moles du monomère monofonctionnel) d'un monomère multifonctionnel;
(c) d'un agent de transfert de chaîne; et
(d) d'un initiateur;
et par la suite la réaction dudit mélange pour former un copolymère ramifié.

9. Particule de copolymère ramifié qui comprend un copolymer, ramifié amphiphile selon l'une quelconque des revendications 1 à 7, dans lequel la particule comprend un noyau hydrophobe et une enveloppe hydrophile et dans laquelle la particule est une nanoparticule et dans laquelle la particule a un diamètre de 2 à 600 nm, de préférence 2 à 300 nm, plus préférablement 5 à 100 nm, particulièrement 5 à 75 nm et spécialement 10 à 60 nm.

10. Procédé de préparation d'une particule de copolymère ramifié selon la revendication 9, qui comprend l'addition d'un copolymère ramifié amphiphile selon l'une quelconque des revendications 1 à 8 à un solvant et, optionellement, l'élimination du solvant.

11. Solution aqueuse contenant une particule de copolymère ramifié selon la revendication 9.

12. Composition comprenant un copolymère amphiphile selon l'une quelconque des revendications 1 à 7 et un support ou une particule de copolymère ramifié selon la revendication 9 et un support dans lequel le support est une solution aqueuse.

13. Utilisation d'un copolymère amphiphile selon l'une quelconque des revendications 1 à 7 ou d'une particule de copolymère ramifié selon la revendication 9 comme agent d'encapsulation, comme nanoréacteur, comme émulsifiant pour émulsion de type Pickering et/ou comme agent de libération déclenchée.
